# FASCICULE DE BREVET EUROPEEN

(11) **EP 3 519 294 B1**
(45) Date de publication et mention de la délivrance du brevet: **11.11.2020**
(21) Numéro de dépôt: 17783943.8
(22) Date de dépôt: 27.09.2017
(51) Int. Cl.: B64C 27/08, B64D 27/02

(54) **SYSTEME PROPULSIF HYBRIDE POUR AERONEF A VOILURE TOURNANTE MULTIROTOR COMPRENANT DES MOYENS AMELIORES DE CONVERSION DC/AC**
HYBRIDANTRIEBSSYSTEM FÜR EINEN DREHFLÜGLER MIT MEHREREN ROTOREN MIT VERBESSERTEM DC/AC-WANDLER
HYBRID PROPULSION SYSTEM FOR MULTI-ROTOR ROTARY-WING AIRCRAFT, COMPRISING IMPROVED DC/AC CONVERSION MEANS

(30) Priorité: 29.09.2016 FR 1659366
(43) Date de publication de la demande: 07.08.2019
(73) Titulaire: Safran Helicopter Engines, 64510 Bordes (FR)
(72) Inventeur: KLONOWSKI, Thomas, 77550 Moissy-Cramayel (FR); MEZIERE, Ludovic, 77550 Moissy-Cramayel (FR); PLISSONNEAU, Bernard, 77550 Moissy-Cramayel (FR)
(74) Mandataire: Brevalex
(86) Numéro de dépôt international: PCT/FR2017/052595
(87) Numéro de publication internationale: WO 2018/060591

(56) Documents cités:
- CN-A- 105 711 826
- CN-U- 205 554 582
- FR-A1- 2 962 407
- FR-A1- 2 990 573
- JP-A- 2015 137 092
- US-A1- 2013 147 204

## Description

### DOMAINE TECHNIQUE

La présente invention concerne un système propulsif hybride destiné aux aéronefs à voilure tournante multirotor, ainsi qu'un procédé de fabrication d'un tel système propulsif hybride.

### ÉTAT DE LA TECHNIQUE ANTÉRIEURE

De l'état de la technique est connu un système propulsif hybride pour aéronef à voilure tournante multirotor comprenant :
- un moteur à combustion interne, et un générateur électrique accouplé au moteur à combustion interne de sorte qu'en fonctionnement, le moteur à combustion interne entraîne le générateur électrique,
- un redresseur relié au générateur électrique pour convertir un courant alternatif délivré par le générateur électrique en un courant continu, des moyens de conversion du courant continu en courant alternatif, et un réseau électrique reliant le redresseur aux moyens de conversion,
- des moteurs électriques reliés aux moyens de conversion de sorte qu'en fonctionnement, les moyens de conversion alimentent les premiers moteurs électriques en courant alternatif, et
- des hélices accouplées aux moteurs électriques de sorte qu'en fonctionnement, les moteurs électriques entraînent les hélices.

En particulier, les moyens de conversion comprennent des onduleurs respectivement reliés aux moteurs électriques de manière à alimenter ces derniers en courant alternatif.

Ces systèmes propulsifs présentent toutefois l'inconvénient d'être relativement lourds. Le document CN 105711826 A divulgue un drone hybride avec un moteur à combustion interne accouplé à un générateur électrique pour fournir du courant à des moteur électriques à courant continu entraînant des hélices. Le document FR 2 990 573 A1 divulgue un système de commande et d'alimentation en énergie des turbomachines d'un giravion, le système comprenant des moteurs à courant alternatif, chaque moteur ayant des moyens de conversion de courant avec respectivement un onduleur.

### EXPOSÉ DE L'INVENTION

L'invention a notamment pour but d'apporter une solution simple, économique et efficace à ce problème.

Elle propose à cet effet un système propulsif hybride pour aéronef à voilure tournante, comprenant :
- un moteur à combustion interne et un générateur électrique accouplé au moteur à combustion interne de sorte qu'en fonctionnement, le moteur à combustion interne entraîne le générateur électrique,
- un redresseur relié au générateur électrique pour convertir un courant alternatif délivré par le générateur électrique en un courant continu, des moyens de conversion configurés pour convertir le courant continu en courant alternatif, et un réseau électrique reliant le redresseur aux moyens de conversion,
- au moins un premier groupe d'au moins deux premiers moteurs électriques reliés aux moyens de conversion de sorte qu'en fonctionnement, les moyens de conversion alimentent les premiers moteurs électriques en courant alternatif, et
- des hélices respectivement accouplées aux premiers moteurs électriques de sorte qu'en fonctionnement, les premiers moteurs électriques entraînent les hélices.

Selon l'invention, les moyens de conversion comprennent un premier onduleur configuré pour alimenter en parallèle les premiers moteurs électriques.

Le principe général de l'invention consiste ainsi à mutualiser l'alimentation de plusieurs moteurs électriques d'un système propulsif hybride d'aéronef à voilure tournante au moyen d'un même onduleur.

L'invention permet ainsi une réduction de masse par rapport aux systèmes propulsifs hybrides de type connu, d'une part, par la réduction du nombre d'onduleurs, et également par la réduction du nombre et de la masse des filtres CEM.

De plus, l'alimentation de plusieurs moteurs électriques par un même onduleur permet d'optimiser la synchronisation de ces moteurs électriques. Ceci permet d'améliorer la portance du système propulsif hybride.

De préférence, les premiers moteurs électriques alimentés par le premier onduleur sont au nombre de deux.

Dans certains modes de réalisation de l'invention, les hélices accouplées aux premiers moteurs électriques sont deux hélices contrarotatives coaxiales.

Dans un mode de réalisation préféré de l'invention, le système propulsif hybride comprend au moins un autre groupe d'au moins deux autres moteurs électriques, et d'autres hélices respectivement accouplées à ces autres moteurs électriques, et les moyens de conversion comprennent, pour le ou chaque autre groupe d'autres moteurs électriques, un autre onduleur correspondant configuré pour alimenter en parallèle les autres moteurs électriques correspondants.

Dans ce cas, les premiers moteurs électriques et les autres moteurs électriques présentent avantageusement une caractéristique intrinsèque dont la variance, calculée pour les moteurs de l'un quelconque du premier groupe et de l'autre ou de chaque autre groupe, est inférieure à la variance de ladite caractéristique intrinsèque calculée pour l'ensemble des premiers moteurs électriques et des autres moteurs électriques.

La ou les caractéristiques intrinsèques considérées sont de préférence des caractéristiques électriques ou électromagnétiques telles que les résistances statoriques, les inductances synchrones, et les flux d'origine rotorique.

De préférence, le système propulsif hybride comprend en outre une unité de stockage d'énergie reliée au réseau électrique en parallèle au générateur électrique.

L'invention concerne également un aéronef à voilure tournante multirotor, comprenant un système propulsif hybride du type décrit ci-dessus.

L'invention concerne encore un procédé de fabrication d'un système propulsif hybride du type décrit ci-dessus, comprenant au moins les étapes consistant respectivement à :
- mettre à disposition une pluralité de moteurs électriques, des hélices, un moteur à combustion interne, un générateur électrique, un redresseur, un réseau électrique, et un premier onduleur;
- accoupler le générateur électrique au moteur à combustion interne ;
- relier le redresseur au générateur électrique ;
- relier le premier onduleur au redresseur au moyen du réseau électrique ;
- sélectionner, parmi la pluralité de moteurs électriques, un premier groupe d'au moins deux premiers moteurs électriques ;
- relier en parallèle les premiers moteurs électriques au premier onduleur ;
- accoupler une partie au moins des hélices aux premiers moteurs électriques.

Dans le mode de réalisation préféré de l'invention, le procédé comprend en outre les étapes consistant respectivement à :
- sélectionner, parmi la pluralité de moteurs électriques, au moins un autre groupe d'au moins deux autres moteurs électriques ;
- mettre à disposition, pour le ou chaque autre groupe d'autres moteurs électriques, un autre onduleur correspondant ;
- relier en parallèle les autres moteurs électriques du ou de chaque autre groupe à l'autre onduleur correspondant.

De préférence, les premiers moteurs électriques et les autres moteurs électriques sont choisis de manière à présenter une caractéristique intrinsèque dont la variance, calculée pour les moteurs de l'un quelconque du premier groupe et de l'autre ou de chaque autre groupe, est inférieure à la variance de ladite caractéristique intrinsèque calculée pour l'ensemble des premiers moteurs électriques et des autres moteurs électriques.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique de dessus d'un aéronef à voilure tournante multirotor selon un mode de réalisation préféré de l'invention ;
- la figure 2 est une vue schématique partielle d'un système propulsif hybride équipant l'aéronef de la figure 1 ;
- la figure 3 est une vue schématique d'une partie du système propulsif hybride de la figure 2, illustrant en particulier un onduleur et deux moteurs électriques appartenant à ce système.

### EXPOSÉ DÉTAILLÉ DE MODES DE RÉALISATION PRÉFÉRÉS

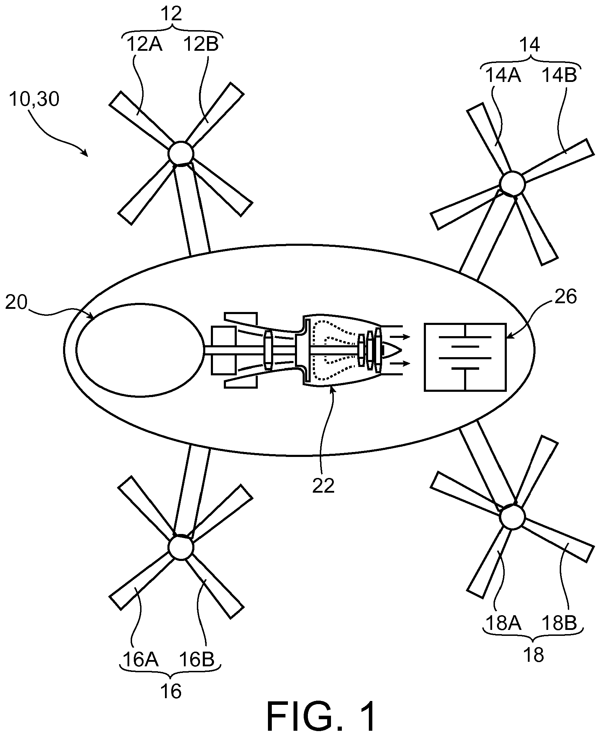

La figure 1 illustre un aéronef à voilure tournante 10, par exemple un aéronef octorotor, du type comprenant quatre paires 12, 14, 16, 18 d'hélices contrarotatives 12A, 12B, 14A, 14B, 16A, 16B, 18A, 18B.

D'une manière générale, ces hélices sont respectivement accouplées à des moteurs électriques (non visibles sur la figure 1) qui assurent ainsi l'entraînement en rotation des hélices. Ces moteurs électriques sont eux-mêmes alimentés en énergie électrique par un générateur électrique 20 entraîné par un moteur à combustion interne 22 tel qu'une turbomachine. La liaison entre le générateur électrique 20 et les moteurs électriques est opérée en courant continu, sous une tension relativement élevée, dans le but d'améliorer la stabilité du réseau et la gestion de puissance. À cet effet, un redresseur assure la conversion du courant alternatif délivré par le générateur électrique 20 en courant continu, tandis que des moyens de conversion assurent la conversion de ce courant continu en courant alternatif destiné aux moteurs électriques, comme cela apparaîtra plus clairement dans ce qui suit. La liaison entre le générateur électrique 20 et les moteurs électriques en courant continu est notamment avantageuse du fait que le générateur électrique 20 fonctionne à une vitesse constante et permet donc d'avoir une tension continue stable après conversion.

Préférentiellement, une unité de stockage d'énergie 26 est également prévue pour alimenter temporairement les moteurs électriques en complétant ou en se substituant au générateur électrique 20, d'une manière connue en soi. L'unité de stockage d'énergie 26 est par exemple de type électrochimique mais peut, en variante, être de type électrostatique (capacitif) ou mécanique.

La liaison en courant continu mentionnée ci-dessus présente dans ce cas un avantage supplémentaire du fait qu'une telle liaison permet de relier de manière simple le générateur électrique 20 et l'unité de stockage d'énergie 26, d'une part, aux moteurs électriques, d'autre part.

En variante, l'unité de stockage d'énergie 26 peut être reliée au reste du système par l'intermédiaire d'un hacheur, également dénommé convertisseur continu-continu, permettant notamment d'assurer la bonne recharge de l'unité de stockage d'énergie 26 et également d'assurer une redondance de la chaine électrique dans le cas où l'unité de stockage d'énergie 26 venait à être défaillante.

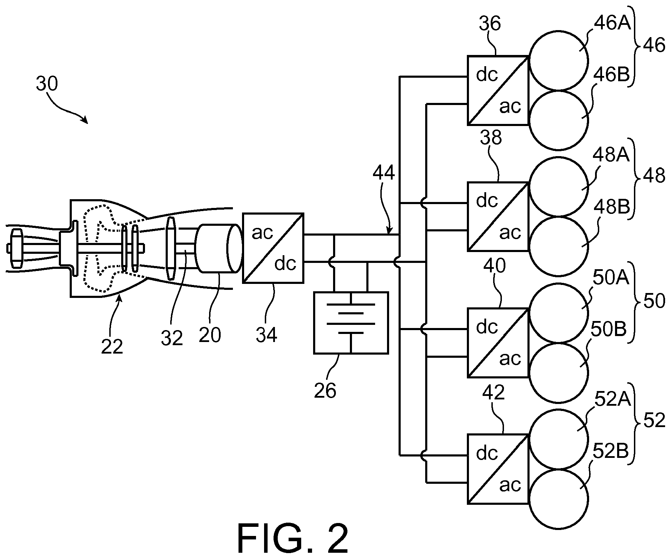

L'ensemble de ces éléments forme un système propulsif hybride 30, qui va maintenant être décrit plus en détail en référence à la figure 2.

Le système propulsif hybride 30 comprend donc le moteur à combustion interne 22 et le générateur électrique 20. Ce dernier comporte typiquement un rotor accouplé à un arbre de sortie 32, tel qu'un arbre d'une turbine libre ou liée, du moteur à combustion interne 22.

Une sortie électrique du générateur électrique 20 est reliée à une entrée du redresseur 34 pour convertir le courant alternatif AC fourni par le générateur électrique 20 en courant continu DC.

Une sortie du redresseur 34 est reliée en parallèle, au moyen d'un réseau électrique 44, à des entrées respectives de moyens de conversion, à savoir un premier onduleur 36, un deuxième onduleur 38, un troisième onduleur 40 et un quatrième onduleur 42, prévus pour reconvertir le courant continu DC en courant alternatif AC destiné à l'alimentation des moteurs électriques.

Plus précisément, le premier onduleur 36 présente une sortie reliée en parallèle à un premier groupe 46 de deux premiers moteurs électriques 46A, 46B, que le premier onduleur 36 alimente ainsi en courant alternatif AC.

De manière analogue, les autres onduleurs 38, 40, 42 présentent des sorties respectives qui sont respectivement reliées en parallèle à d'autres groupes 48, 50, 52 comprenant chacun deux autres moteurs électriques correspondants 48A, 48B, 50A, 50B, 52A, 52B.

Le système propulsif hybride 30 comporte ainsi plusieurs groupes comprenant chacun deux moteurs électriques, et est configuré de sorte que les moteurs d'un même groupe soient alimentés en énergie électrique par un même onduleur correspondant.

Les deux moteurs électriques 46A-52B de chaque groupe sont respectivement accouplés aux deux hélices d'une paire correspondante 12-18 d'hélices contrarotatives.

L'alimentation de moteurs électriques par un même onduleur permet de réduire la masse du système propulsif hybride.

De plus, une telle configuration permet une bonne synchronisation de ces moteurs, et donc des hélices entraînées par ces derniers. Ceci permet d'améliorer la portance du système propulsif hybride, particulièrement dans le cas d'un système à hélices contrarotatives tel que le système illustré sur les figures.

Par ailleurs, l'unité de stockage d'énergie 26 est également reliée en parallèle à chacun des onduleurs 36-42.

Les moteurs électriques 46A-52B sont tous de même type. Toutefois, pour optimiser la commande conjointe et la synchronisation des deux moteurs de chaque groupe, les moteurs électriques 46A-52B sont répartis dans les différents groupes 46-52 de manière à présenter au moins une caractéristique intrinsèque dont la variance, calculée pour les moteurs électriques de l'un quelconque des groupes 46-52, soit inférieure à la variance de ladite caractéristique intrinsèque calculée pour l'ensemble des moteurs électriques 46A-52B. Autrement dit, les moteurs électriques sont regroupés selon la valeur de la caractéristique intrinsèque précitée pour minimiser l'écart de valeur de cette caractéristique au sein de chaque groupe.

La ou les caractéristiques intrinsèques considérées sont de préférence des caractéristiques électriques ou électromagnétiques telles que les résistances statoriques, les inductances synchrones, et les flux d'origine rotorique.

Dans le mode de réalisation préféré de l'invention, les moteurs électriques 46A-52B sont des moteurs asynchrones polyphasés. Ces moteurs peuvent être de différents types tels que des moteurs à induction ou des moteurs à reluctance variable.

À titre préférentiel, les deux moteurs électriques de chaque groupe sont du type mono-stator multirotor, ce qui permet de réduire la masse et le volume des moteurs électriques tout en aidant à minimiser la variance des résistances statoriques des moteurs électriques au sein de chaque groupe. Cela permet en particulier de favoriser l'égalité des courants électriques respectifs au sein des deux moteurs électriques d'un même groupe.

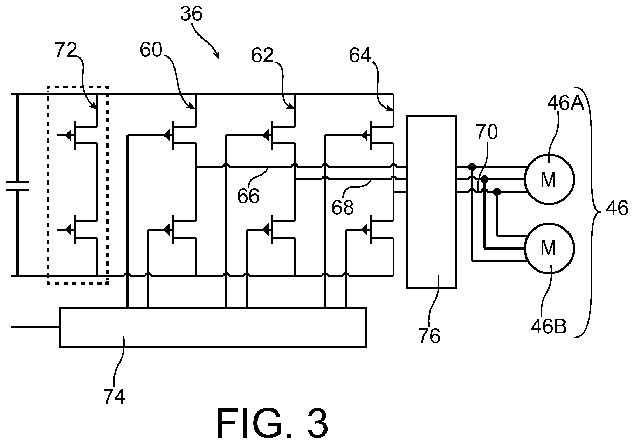

La figure 3 illustre un exemple de configuration du premier onduleur 36 ainsi que les deux premiers moteurs électriques 46A, 46B. Les autres onduleurs 38-42 présentent une configuration analogue.

Comme le montre la figure 3, le premier onduleur 36 est un onduleur en pont comportant trois bras d'onduleur 60, 62, 64 délivrant respectivement les trois phases 66, 68, 70 de courant alternatif à chacun des deux premiers moteurs électriques 46A, 46B. Le premier onduleur 36 comporte un bras d'onduleur de secours 72 qui est initialement inopérant et qui est prévu pour remplacer l'un des trois bras 60, 62, 64 en cas de défaillance de celui-ci. Le premier onduleur 36 comporte en outre de manière conventionnelle un module 74 de commande des bras d'onduleur 60, 62, 64 et un module 76 de filtrage CEM.

Le système propulsif hybride 30 peut être fabriqué au moyen d'un procédé comprenant les étapes consistant à :
- mettre à disposition les moteurs électriques 46A-52B, les hélices 12A-18B, le moteur à combustion interne 22, le générateur électrique 20, le redresseur 34, le réseau électrique 44, et les moyens de conversion constitués du premier onduleur 36, du deuxième onduleur 38, du troisième onduleur 40 et du quatrième onduleur 42 ;
- accoupler le générateur électrique 20 au moteur à combustion interne 22 ;
- relier le redresseur 34 au générateur électrique 20 ;
- relier chacun des onduleurs 36-42 au redresseur 34 au moyen du réseau électrique 44 ;
- répartir les moteurs électriques 46A-52B en groupes de deux moteurs, de sorte que la variance d'au moins une caractéristique intrinsèque des moteurs électriques calculée pour les moteurs de l'un quelconque des groupes 46-52, soit inférieure à la variance de ladite caractéristique intrinsèque calculée pour l'ensemble des moteurs électriques 46A-52B ;
- relier en parallèle les moteurs électriques de chaque groupe à un onduleur 36-42 correspondant ;
- accoupler les hélices respectivement aux moteurs électriques 46A-52B.

Comme expliqué ci-dessus, le principe général de l'invention consiste à mutualiser l'alimentation de moteurs électriques d'un système propulsif hybride d'aéronef à voilure tournante multirotor au moyen d'onduleurs.

Ce principe général peut être appliqué à diverses configurations de systèmes propulsifs hybrides, sans sortir du cadre de la présente invention.

Ainsi, le nombre d'hélices peut être supérieur ou inférieur à 8. Il peut par exemple être égal à quatre dans le cas d'un aéronef de type quadrirotor, parfois dénommé quadricoptère. De plus, les hélices entraînées par les moteurs électriques d'un même groupe peuvent ne pas adopter une configuration d'hélices contrarotatives coaxiales.

Le nombre d'onduleurs peut également varier, de même que le type de ces onduleurs.

De plus, le nombre de moteurs électriques alimentés par un même onduleur peut être supérieur à deux. Il est cependant souhaitable que ce nombre reste relativement bas pour conserver une redondance suffisante des organes propulsifs, une telle redondance étant souhaitable pour garantir la sécurité de l'aéronef.

Sous son aspect le plus général, le système propulsif hybride selon l'invention comporte donc au moins un onduleur et au moins deux moteurs électriques alimentés par cet onduleur.

## Revendications

1. Système propulsif hybride (30) pour aéronef à voilure tournante multirotor (10), comprenant :
- un moteur à combustion interne (22) et un générateur électrique (20) accouplé au moteur à combustion interne de sorte qu'en fonctionnement, le moteur à combustion interne entraîne le générateur électrique,
- un redresseur (34) relié au générateur électrique pour convertir un courant alternatif délivré par le générateur électrique en un courant continu, des moyens de conversion configurés pour convertir le courant continu en courant alternatif, et un réseau électrique (44) reliant le redresseur aux moyens de conversion,
- au moins un premier groupe (46) d'au moins deux premiers moteurs électriques (46A, 46B) reliés aux moyens de conversion de sorte qu'en fonctionnement, les moyens de conversion alimentent les premiers moteurs électriques en courant alternatif,
- des hélices (12A, 12B) respectivement accouplées aux premiers moteurs électriques de sorte qu'en fonctionnement, les premiers moteurs électriques entraînent les hélices, **caractérisé en ce que** les moyens de conversion comprennent un premier onduleur (36) configuré pour alimenter en parallèle les premiers moteurs électriques.

2. Système propulsif hybride selon la revendication 1, dans lequel les premiers moteurs électriques (46A, 46B) alimentés par le premier onduleur (36) sont au nombre de deux.

3. Système propulsif hybride selon la revendication 2, dans lequel les hélices (12A, 12B) accouplées aux premiers moteurs électriques (46A, 46B) sont deux hélices contra rotatives coaxiales.

4. Système propulsif hybride selon l'une quelconque des revendications 1 à 3, comprenant au moins un autre groupe (48, 50, 52) d'au moins deux autres moteurs électriques (48A, 48B, 50A, 50B, 52A, 52B), et d'autres hélices (14A, 14B, 16A, 16B, 18A, 18B) respectivement accouplées à ces autres moteurs électriques, et dans lequel les moyens de conversion comprennent, pour le ou chaque autre groupe d'autres moteurs électriques, un autre onduleur correspondant (38, 40, 42) configuré pour alimenter en parallèle les autres moteurs électriques correspondants.

5. Système propulsif hybride selon la revendication 4, dans lequel les premiers moteurs électriques (46A, 46B) et les autres moteurs électriques (48A, 48B, 50A, 50B, 52A, 52B) présentent une caractéristique intrinsèque dont la variance, calculée pour les moteurs de l'un quelconque du premier groupe (46) et de l'autre ou de chaque autre groupe (48, 50, 52), est inférieure à la variance de ladite caractéristique intrinsèque calculée pour l'ensemble des premiers moteurs électriques et des autres moteurs électriques.

6. Système propulsif hybride selon l'une quelconque des revendications 1 à 5, comprenant en outre une unité de stockage d'énergie (26) reliée au réseau électrique (44) en parallèle au générateur électrique (20).

7. Aéronef à voilure tournante multirotor (10), comprenant un système propulsif hybride (30) selon l'une quelconque des revendications 1 à 6.

8. Procédé de fabrication d'un système propulsif hybride (30) selon l'une quelconque des revendications 1 à 6, comprenant au moins les étapes consistant respectivement à :
- mettre à disposition une pluralité de moteurs électriques, des hélices, un moteur à combustion interne (22), un générateur électrique (20), un redresseur (34), un réseau électrique (44), et un premier onduleur (36) ;
- accoupler le générateur électrique (20) au moteur à combustion interne (22) ;
- relier le redresseur (34) au générateur électrique (20) ;
- relier le premier onduleur (36) au redresseur (34) au moyen du réseau électrique (44) ;
- sélectionner, parmi la pluralité de moteurs électriques, un premier groupe (46) d'au moins deux premiers moteurs électriques (46A, 46B) ;
- relier en parallèle les premiers moteurs électriques (46A, 46B) au premier onduleur (36) ;
- accoupler une partie au moins des hélices (12A, 12B) aux premiers moteurs électriques (46A, 46B).

9. Procédé selon la revendication 8 de fabrication d'un système propulsif hybride (30) selon la revendication 5, comprenant en outre les étapes consistant respectivement à :
- sélectionner, parmi la pluralité de moteurs électriques, au moins un autre groupe (48, 50, 52) d'au moins deux autres moteurs électriques (48A, 48B, 50A, 50B, 52A, 52B) ;
- mettre à disposition, pour le ou chaque autre groupe d'autres moteurs électriques, un autre onduleur correspondant (38, 40, 42) ;
- relier en parallèle les autres moteurs électriques du ou de chaque autre groupe à l'autre onduleur correspondant.

10. Procédé selon la revendication 9, dans lequel les premiers moteurs électriques (46A, 46B) et les autres moteurs électriques (48A, 48B, 50A, 50B, 52A, 52B) sont choisis de manière à présenter une caractéristique intrinsèque dont la variance, calculée pour les moteurs de l'un quelconque du premier groupe (46) et de l'autre ou de chaque autre groupe (48, 50, 52), est inférieure à la variance de ladite caractéristique intrinsèque calculée pour l'ensemble des premiers moteurs électriques et des autres moteurs électriques.

## Patentansprüche

1. Hybridantriebssystem (30) für einen Drehflügler mit mehreren Rotoren (10), mit:
- einem Verbrennungsmotor (22) und einem elektrischen Generator (20), der mit dem Verbrennungsmotor derart gekoppelt ist, dass der Verbrennungsmotor im Betrieb den elektrischen Generator antreibt,
- einem Gleichrichter (34), der mit dem elektrischen Generator verbunden ist, um einen von dem elektrischen Generator gelieferten Wechselstrom in einen Gleichstrom umzuwandeln, wobei Umwandlungsmittel zur Umwandlung des Gleichstroms in Wechselstrom konfiguriert sind, und wobei ein Stromnetz (44) den Gleichrichter mit den Umwandlungsmitteln verbindet,
- mindestens einer ersten Gruppe (46) von mindestens zwei ersten Elektromotoren (46A, 46B), die mit den Umwandlungsmitteln derart verbunden sind, dass die Umwandlungsmittel im Betrieb die ersten Elektromotoren mit Wechselstrom speisen,
- Propeller (12A, 12B), die jeweils mit den ersten Elektromotoren derart gekoppelt sind, dass die ersten Elektromotoren im Betrieb die Propeller antreiben, **dadurch gekennzeichnet, dass** die Umwandlungsmittel einen ersten Wechselrichter (36) aufweisen, der dazu konfiguriert ist, die ersten Elektromotoren parallel zu speisen.

2. Hybridantriebssystem nach Anspruch 1, wobei die ersten Elektromotoren (46A, 46B), die durch den ersten Wechselrichter (36) gespeist werden, zwei an der Zahl sind.

3. Hybridantriebssystem nach Anspruch 2, wobei die mit den ersten Elektromotoren (46A, 46B) gekoppelten Propeller (12A, 12B) zwei gegenläufige koaxiale Propeller sind.

4. Hybridantriebssystem nach einem der Ansprüche 1 bis 3, mit mindestens einer weiteren Gruppe (48, 50, 52) von mindestens zwei weiteren Elektromotoren (48A, 48B, 50A, 50B, 52A, 52B) sowie weiteren Propellern (14A, 14B, 16A, 16B, 18A, 18B), die jeweils mit diesen weiteren Elektromotoren gekoppelt sind, und wobei die Umwandlungsmittel für die oder jede weitere Gruppe von weiteren Elektromotoren, einen weiteren entsprechenden Wechselrichter (38, 40, 42) umfassen, der dazu konfiguriert ist, die weiteren entsprechenden Elektromotoren parallel zu speisen.

5. Hybridantriebssystem nach Anspruch 4, wobei die ersten Elektromotoren (46A, 46B) und die weiteren Elektromotoren (48A, 48B, 50A, 50B, 52A, 52B) eine intrinsische Eigenschaft aufweisen, deren Varianz, die für die Motoren einer der ersten Gruppe (46) und der weiteren oder jeder weiteren Gruppe (48, 50, 52) berechnet wird, geringer ist als die Varianz dieser intrinsischen Eigenschaft, die für die Gesamtheit der ersten Elektromotoren und der weiteren Elektromotoren berechnet wird.

6. Hybridantriebssystem nach einem der Ansprüche 1 bis 5, weiterhin mit einer Energiespeichereinheit (26), die parallel zu dem elektrischen Generator (20) an das Stromnetz (44) angeschlossen ist.

7. Drehflügler mit mehreren Rotoren (10), mit einem Hybridantriebssystem (30) nach einem der Ansprüche 1 bis 6.

8. Herstellungsverfahren eines Hybridantriebssystems (30) nach einem der Ansprüche 1 bis 6, mit mindestens den folgenden Schritten:
- Bereitstellen einer Mehrzahl von Elektromotoren, von Propellern, eines Verbrennungsmotors (22), eines elektrischen Generators (20), eines Gleichrichters (34), eines Stromnetzes (44) und eines ersten Wechselrichters (36);
- Koppeln des elektrischen Generators (20) mit dem Verbrennungsmotor (22);
- Anschließen des Gleichrichters (34) an den elektrischen Generator (20);
- Anschließen des ersten Wechselrichters (36) an den Gleichrichter (34) mithilfe des Stromnetzes (44);
- Auswählen, aus der Mehrzahl von Elektromotoren, einer ersten Gruppe (46) von mindestens zwei ersten Elektromotoren (46A, 46B);
- Anschließen der ersten Elektromotoren (46A, 46B) parallel an den ersten Gleichrichter (36);
- Koppeln mindestens eines Teils der Propeller (12A, 12B) mit den ersten Elektromotoren (46A, 46B).

9. Verfahren nach Anspruch 8 zur Herstellung eines Hybridantriebssystems (30) nach Anspruch 5, weiterhin mit den folgenden Schritten:
- Auswählen, aus der Mehrzahl der Elektromotoren, mindestens einer weiteren Gruppe (48, 50, 52) von mindestens zwei weiteren Elektromotoren (48A, 48B, 50A, 50B, 52A, 52B);
- Bereitstellen, für die oder jede weitere Gruppe von weiteren Elektromotoren, eines weiteren entsprechenden Wechselrichters (38, 40, 42);
- Anschließen der weiteren Elektromotoren der oder jeder weiteren Gruppe parallel an den weiteren entsprechenden Wechselrichter.

10. Verfahren nach Anspruch 9, wobei die ersten Elektromotoren (46A, 46B) und die weiteren Elektromotoren (48A, 48B, 50A, 50B, 52A, 52B) derart gewählt werden, dass sie eine intrinsische Eigenschaft aufweisen, deren Varianz, berechnet für die Motoren einer der ersten Gruppe (46) und der weiteren oder jeder weiteren Gruppe (48, 50, 52), geringer ist als die Varianz dieser intrinsischen Eigenschaft, die für die Gesamtheit der ersten Elektromotoren und der weiteren Elektromotoren berechnet wird.

## Claims

1. A hybrid propulsion system (30) for a multi-rotor rotary wing aircraft (10), comprising:
- an internal combustion engine (22) and an electric generator (20) coupled to the internal combustion engine such that in use, the internal combustion engine drives the electric generator,
- a rectifier (34) connected to the electric generator to convert an alternating current delivered by the electric generator into a direct current, conversion means configured to convert the direct current into alternating current, and an electric network (44) connecting the rectifier to the conversion means,
- at least one first group (46) of at least two first electric motors (46A, 46B) connected to the conversion means such that in use, the conversion means supply the first electric motors with alternating current,
- propellers (12A, 12B) respectively coupled to the first electric motors such that in use, the first electric motors drive the propellers, **characterised in that** the conversion means comprise a first inverter (36) configured to supply the first electric motors in parallel.

2. The hybrid propulsion system according to claim 1, wherein the first electric motors (46A, 46B) supplied by the first inverter (36) are two in number.

3. The hybrid propulsion system according to claim 2, wherein the propellers (12A, 12B) coupled to the first electric motors (46A, 46B) are two coaxial contra-rotating propellers.

4. The hybrid propulsion system according to any of claims 1 to 3, comprising at least one other group (48, 50, 52) of at least two other electric motors (48A, 48B, 50A, 50B, 52A, 52B), and other propellers (14A, 14B, 16A, 16B, 18A, 18B) respectively coupled to these other electric motors, and wherein the conversion means comprise, for the or each other group of other electric motors, another corresponding inverter (38, 40, 42) configured to supply the other corresponding electric motors in parallel.

5. The hybrid propulsion system according to claim 4, wherein the first electric motors (46A, 46B) and the other electric motors (48A, 48B, 50A, 50B, 52A, 52B) have an intrinsic characteristic the variance of which, calculated for the motors of any of the first group (46) and the other or each other group (48, 50, 52), is lower than the variance of said intrinsic characteristic calculated for all the first electric motors and the other electric motors.

6. The hybrid propulsion system according to any of claims 1 to 5, further comprising an energy storage unit (26) connected to the electric network (44) in parallel with the electric generator (20).

7. A multi-rotor rotary wing aircraft (10), comprising a hybrid propulsion system (30) according to any of claims 1 to 6.

8. A method for manufacturing a hybrid propulsion system (30) according to any of claims 1 to 6, comprising at least the respective steps of:
- providing a plurality of electric motors, propellers, an internal combustion engine (22), an electric generator (20), a rectifier (34), an electric network (44), and a first inverter (36);
- coupling the electric generator (20) to the internal combustion engine (22);
- connecting the rectifier (34) to the electric generator (20);
- connecting the first inverter (36) to the rectifier (34) by means of the electric network (44);
- selecting, among the plurality of electric motors, a first group (46) of at least two first electric motors (46A, 46B);
- connecting the first electric motors (46A, 46B) in parallel with the first inverter (36);
- coupling at least part of the propellers (12A, 12B) to the first electric motors (46A, 46B).

9. The method according to claim 8 for manufacturing a hybrid propulsion system (30) according to claim 5, further comprising the respective steps of:
- selecting, among the plurality of electric motors, at least one other group (48, 50, 52) of at least two other electric motors (48A, 48B, 50A, 50B, 52A, 52B);
- providing, for the or each other group of other electric motors, another corresponding inverter (38, 40, 42);
- connecting the other electric motors of the or each other group in parallel with the corresponding other inverter.

10. The method according to claim 9, wherein the first electric motors (46A, 46B) and the other electric motors (48A, 48B, 50A, 50B, 52A, 52B) are chosen so as to have an intrinsic characteristic the variance of which, calculated for the motors of any of the first group (46) and the other or each other group (48, 50, 52), is lower than the variance of said intrinsic characteristic calculated for all the first electric motors and the other electric motors.
